# EUROPEAN PATENT SPECIFICATION

(11) **EP 3 954 198 B1**
(45) Date of publication and mention of the grant of the patent: **11.03.2026**
(21) Application number: 21189526.3
(22) Date of filing: 03.08.2021
(51) Int. Cl.: A01G 3/053

(54) **HEDGE CUTTER**
HECKENSCHNEIDER
TAILLE-HAIE

(30) Priority: 10.08.2020 CN 202010794533
(43) Date of publication of application: 16.02.2022
(73) Proprietor: Techtronic Cordless GP, Anderson, SC 29621 (US)
(72) Inventor: SABIC, Adis, Kwai Chung (HK); LAM, Kwok Fan, Kwai Chung (HK); LI, Jin Cheng, Dongguan City (CN); LI, Kwong Wing, Kwai Chung (HK); WANG, Li Feng, Dongguan City (CN); WONG, Kar Tat, Kwai Chung (HK)
(74) Representative: Zimmermann & Partner Patentanwälte mbB

(56) References cited:
- EP-A2- 1 782 682
- EP-A2- 2 223 781
- WO-A2-2008/029255
- CN-U- 207 505 508
- DE-U1- 202013 104 882
- US-A1- 2017 071 134
- US-A1- 2019 239 446

## Description

### Technical Field

The present invention relates to a hedge cutter according to the preamble of claim 1.

### Background Art

The hedge cutter is an outdoor garden instrument used to cut branches or leaves by means of a linearly reciprocating long and thin cutting blade or cutting rod so that hedges can be formed as expected. The cutting work is usually done in the following way: The worker holds a hedge cutter with two hands and moves the cutting blade along the shape of a hedge. Currently, electric hedge cutters are very popular. Since electric hedge cutters are held with two hands and are moved during operations, they are lighter and more compact than diesel hedge cutters. In order to thoroughly and stably cut hedges, the rotary driving force output from the motor on a hedge cutter is usually converted by, for example, a gear reduction mechanism, into a larger torque and a lower speed.

However, conventional electric hedge cutters are usually still heavy and difficult for common users to operate. Portable and easy-to-operate hedge cutters are still required in the art.

Hedge cutters according the preamble of claim 1 are known from EP 1 782 682 A2, WO 2008/029255 A2 and EP 2 223 781 A2.

### Summary of the Invention

In view of the above-mentioned background, the object of the present invention is to provide an alternative hedge cutter, which eliminates or alleviates the above-mentioned technical problem or at least provides an available choice.

Those skilled in the art will obtain other objects of the present invention from the description below. Therefore, the statement of the above-mentioned object is not finite and is only used to describe some of a lot of objectives of the present invention.

A hedge cutter according to the present invention is defined in independent claim 1.

The hedge cutter according to the invention comprises a driving motor disposed in a casing, a transmission mechanism disposed in the casing and coupled with the driving motor, a blade arrangement extending from the casing and coupled with the transmission mechanism, and a printed circuit board assembly disposed in the casing and mounted on top of the driving motor, wherein the shape of the printed circuit board assembly corresponds to the cross-section of the driving motor.

In a preferred embodiment, an in-line arrangement of the driving motor and the printed circuit board assembly is perpendicular to the longitudinal axis of the blade arrangement.

In a preferred embodiment of the present invention, a heat radiator is disposed between the driving motor assembly and the printed circuit board assembly.

In another preferred embodiment, the printed circuit board assembly comprises a first printed circuit board, which is mounted at the top of the driving motor assembly away from the output shaft of the motor, and the heat radiator comprises a first heat radiator, which is disposed between the driving motor assembly and the first printed circuit board.

In another preferred embodiment, the shape of the first printed circuit board corresponds to the shape of the cross-section of the driving motor assembly.

In another preferred embodiment, the ratio of the area of the first printed circuit board to the cross-sectional area of the driving motor assembly is 0.7 to 1.5.

In another preferred embodiment, the driving motor assembly, the first printed circuit board and the first heat radiator are arranged in line, and the first printed circuit board is positioned roughly parallel to the extension direction of the blade arrangement.

In another preferred embodiment, the first heat radiator is a passive heat radiator and covers at least 50% of the area of the first printed circuit board.

In another preferred embodiment, the printed circuit board assembly further comprises a second printed circuit board, and the second printed circuit board is mounted on a side of the driving motor assembly and is positioned perpendicular to the extension direction of the blade arrangement.

In another preferred embodiment, a second heat radiator is disposed between the driving motor assembly and the second printed circuit board.

In another preferred embodiment, the second heat radiator is a passive heat radiator and serves as a support of the second printed circuit board, and the second printed circuit board is at least partially accommodated in the second heat radiator.

In another preferred embodiment, the printed circuit board assembly further comprises a third printed circuit board, and the third printed circuit board is mounted on a side of the driving motor assembly and is positioned to form an angle with the extension direction of the blade arrangement. The angle is in a range of 30° to 70°.

In another preferred embodiment, a third heat radiator is disposed between the driving motor assembly and the third printed circuit board. In one embodiment, the third heat radiator is a passive heat radiator and serves as a support of the third printed circuit board, and the third printed circuit board is at least partially accommodated in the third heat radiator.

In another preferred embodiment, the driving motor assembly comprises a fan, the fan is arranged at one end of the driving motor assembly close to the output shaft of the motor, and is in the same in-line arrangement as the driving motor and the first printed circuit board.

In another preferred embodiment, the transmission mechanism comprises a gear transmission mechanism, a belt transmission mechanism or a combination of the gear transmission mechanism and the belt transmission mechanism. Wherein, the transmission mechanism is a gear transmission mechanism, and the gear transmission mechanism comprises a planetary gear or a bevel gear.

In another preferred embodiment, the transmission mechanism comprises a planetary gear and a sun gear, and in addition, the transmission mechanism is in the same in-line arrangement as the driving motor assembly and the printed circuit board assembly, wherein the planetary gear comprises one stage of planetary gear or two stages of planetary gears.

In another preferred embodiment, the casing comprises or is attached with a front handle and a rear handle, a trigger for starting the driving motor assembly is disposed on either of the front handle and the rear handle, a safety switch is disposed on either of the front handle and the rear handle, and the driving motor assembly rotates only when the trigger and the safety switch are both actuated.

In another preferred embodiment, the rear handle can rotate relative to at least a part of the casing and perpendicular to the longitudinal axis of the blade arrangement.

In another preferred embodiment, the power supply of the hedge cutter is a detachable battery pack, and the detachable battery pack is accommodated in or attached to the casing or attached to the front handle or the rear handle.

In another preferred embodiment, the blade arrangement comprises at least a cutting rod, and the cutting rod comprises cutting edge teeth arranged on the two sides and having a sharp cutting edge portion, wherein the top of at least some cutting edge teeth close to the casing have a blunt tip.

In another preferred embodiment, the upper top of the casing has projections suitable for accommodating the in-line arrangement comprising the printed circuit board assembly and the driving motor assembly.

In another preferred embodiment, an exhaust port is disposed on the top of the casing to promote air circulation and improve the heat dissipation performance.

More preferably, the rear handle can at least rotate relative to at least a part of the casing and perpendicular to the longitudinal axis of the blade arrangement.

In another preferred embodiment, the front handle can rotate around the mounting axis so that the angle of the front handle relative to the casing can be adjusted.

In another preferred embodiment, the rear handle can rotate around the longitudinal axis of the hedge cutter.

The present invention has many advantages. The in-line integration of the printed circuit board assembly and the driving motor is adopted in the present invention, and in addition, the motor fan and the driving mechanism may be in the same in-line arrangement as the printed circuit board assembly and the driving motor. Therefore, a compact design of the hedge cutter is provided and a light weight of the hedge cutter is enabled. In addition, the in-line arrangement of components makes it easy to put the barycenter of the hedge cutter at the front handle, and thus human-machine interactions are improved. Furthermore, in some preferred embodiments, the combination of the first stage planetary gear and double-sided sharp cutting edge teeth can provide not only a light and compact design, but also a satisfactory cutting/pruning performance.

### Brief Description of the Drawings

From the description of the following exemplified embodiments in combination with the drawings, the above-mentioned characteristics and other characteristics of the present invention will become obvious. In the drawings,
Fig. 1 is a perspective view of the overall appearance of the hedge cutter according to some embodiments of the present invention,
Fig. 2 is a perspective view of the blade assembly of the hedge cutter according to some embodiments of the present invention,
Fig. 3 is an enlarged partial view of the upper casing of the blade assembly shown in Fig. 2,
Fig. 4 shows the blade assembly according to some embodiments of the present invention,
Fig. 5 shows one blade of the blade assembly according to some embodiments of the present invention,
Fig. 6 shows the gear train according to some embodiments of the present invention,
Fig. 7 shows internal components in the hedge cutter according to some embodiments of the present invention,
Fig. 8 shows the exterior of the hedge cutter according to some embodiments of the present invention,
Fig. 9 shows different orientations of the hedge cutter according to some embodiments of the present invention,
Fig. 10 also shows an integrated driving unit of the hedge cutter according to some embodiments of the present invention.
Fig. 11 also shows an integrated driving unit of the hedge cutter according to some embodiments of the present invention.

### Detailed Description of the Invention

In the attached claims and the above-mentioned description, unless otherwise required for the reason of an expressional language or in the context brought about by an necessary implication, the term "comprise" or a variant (for example, "contain" or "have") is used inclusively, that is to say, it is used to indicate the existence of the characteristics, but is not used to exclude other characteristics existing or added in various embodiments of the present invention.

The terms such as "horizontal", "vertical", "transverse", "longitudinal", "upper", "lower" and similar terms used in the document are used to describe the present invention in the directions the present invention is normally used, but not used to restrict the present invention in any specific direction.

It should be understood that if publications of any prior art are quoted in the document, such references do not constitute the acknowledgement that the publications form a part of common knowledge in the art in any country.

In the document, the arrangement including the driving motor and the printed circuit board assembly mounted at one end of the driving motor may be called an in-line arrangement. Alternatively, besides the driving motor and the printed circuit board assembly mounted at one end of the driving motor, the arrangement includes the printed circuit board assembly, the heat radiator and/or the motor fan disposed between the driving motor and the printed circuit board assembly. The arrangement including the printed circuit board assembly, heat radiator, driving motor and/or motor fan may also be called an in-line arrangement. The meaning of calling such an arrangement an in-line arrangement lies in that the components (printed circuit board assembly, heat radiator, driving motor and motor fan) in the arrangement are arranged in the axis direction, or arranged opposite to each other roughly in an in-line way (roughly having the same axis or roughly connected in series on the same axis), and thus a compact arrangement is formed. As mentioned below, in some preferred embodiments of the present invention, the transmission mechanism (including the gears) located between the integrated driving unit and the driven component (cutting rod) may also be in the same in-line arrangement as the printed circuit board assembly and the driving motor, and thus the overall structure, shape and size of the hedge cutter are more compact. On the one hand, a compact design enables components to occupy a small space. On the other hand, the compact design requires fewer components and mounting components so that the total weight can be reduced, other layouts can be designed and a layout (which will be described below) can be made by use of the barycenter of the hedge cutter. As further discussed below, the rough axis of an in-line arrangement may be perpendicular to the longitudinal direction of the blade arrangement or the cutting rod, and such an in-line arrangement may be called vertical in-line arrangement in the document.

The hedge cutter in some embodiments of the present invention will be described below in combination with the drawings.

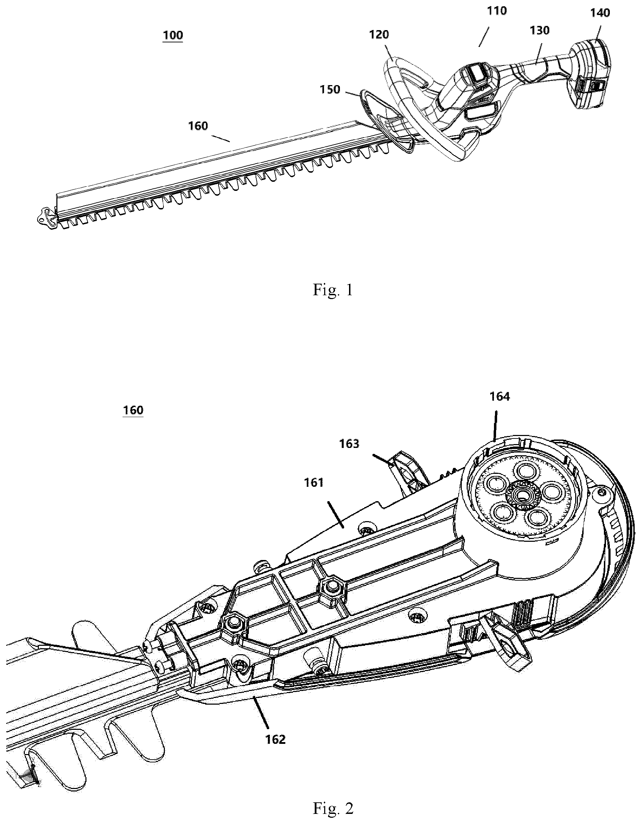

Fig. 1 is a perspective view of the hedge cutter 100 according to some embodiments of the present invention. As shown, the hedge cutter 100 comprises a casing 110. The casing 110 is configured or attached with the front handle 120 and the rear handle 130. A control switch may be disposed on either or both of the front handle 120 and the rear handle 130. In some embodiments, the front handle 120 is an annular handle formed at or attached to the front of the casing 110. The rear handle 130 is formed at the rear of the casing 110. The motor is disposed in the casing 110 between the front handle 120 and the rear handle 130. The rear handle 130 ends at an expanded end portion and the end portion is used for attaching a detachable battery 140. The casing 110 further comprises a baffle 150 at the front of the front handle 120, and the baffle is used to prevent cut branches or leaves from damaging the user and block scraps which may fly to the user during a pruning operation.

The hedge cutter 100 according to the embodiments of the present invention further comprises a blade assembly 160 extending forward from the casing 110. Figs. 2 to 5 further show the structure of the blade assembly 160.

Fig. 2 shows the mounting portion of the blade assembly 160. The mounting portion of the blade assembly 160 comprises an upper casing 161, and the upper casing 161 is mounted to a lower casing 162. The upper casing 161 and the lower casing 162 together form a casing structure accommodating the blade structure. In some embodiments, the casing structure formed by the upper casing 161 and the lower casing 162 is accommodated in the casing 110. In other embodiments, the lower casing 162 forms a part of the casing 110. A gear chamber 164 is formed on the upper casing 161 and is used for mounting a gear train. The gear train is used to transmit the output of the motor to the blade assembly 160. The transmission will be further explained below.

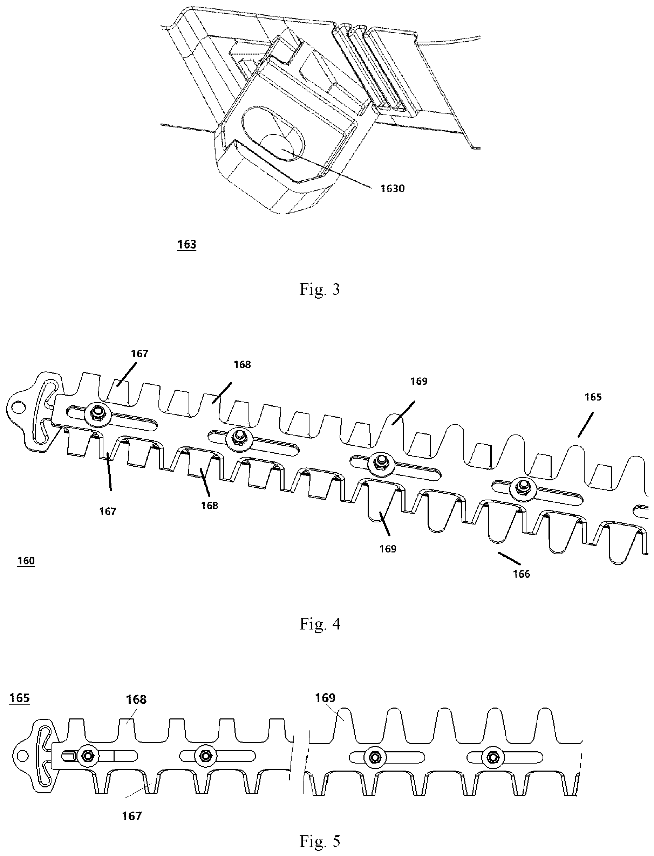

A mounting portion 163 is alternatively formed on the upper casing 161 and is used for mounting the front handle 120.Fig. 3 is an enlarged view of the mounting portion 163. A wiring harness structure, for example, an opening 1630, is alternatively provided on the mounting portion 163 and is used for a control line to pass through and at least partially fixes the control line. The control line may be a wire from the control circuit board to the control switch in the front handle 120. In some embodiments, the opening 1630 is also used for a bolt (not shown) to pass through to fix the front handle 120 to the mounting portion 163. The bolt further fixes the control line.

Fig. 4 shows the cutting portion of the blade assembly 160. The cutting portion of the blade assembly 160 comprises a first blade 165 and a second blade 166 stacked together. In one embodiment, the first blade 165 and the second blade 166 may have roughly the same configuration, but they are stacked in opposite directions. Fig. 5 shows one blade. Sharp teeth 167 are provided on one side of the blade, the sharp teeth 167 transversely extend a short distance and have a flat end, and sharp cutting edges are formed on the two sides of a plane of the teeth. Therefore, the sharp teeth 167 provide a high cutting ability. On the other side of the blade, the front teeth and the rear teeth have different configurations. Short blunt teeth 168 are provided at the front of the other side. The short blunt teeth 168 transversely extend a short distance and have a flat end but no sharp cutting edges on the two sides. Therefore, the short blunt teeth 168 themselves provide no cutting ability, but the length of the short blunt teeth does not prevent objects (for example, hedges) from entering the cutting gap between teeth. Long blunt teeth 169 are provided at the rear of the other side. The long blunt teeth 169 transversely extend a long distance and have a smooth end but no sharp cutting edges on the two sides. Therefore, the long blunt teeth 169 themselves provide no cutting ability, and help to prevent objects (for example, hand) from entering the cutting gap between teeth. The size of long blunt teeth 169 is larger than the size of short blunt teeth 168. Therefore, long blunt teeth 169 are firmer to cut thick hedges. Long blunt teeth 169 and short blunt teeth 168 respectively occupy half the distance of the blade. In the embodiment shown in Fig. 1, the long blunt teeth 169 occupy about two thirds of the distance of the blade and short blunt teeth 168 occupy about one third of the distance of the blade.

By stacking the first blade 165 and the second blade 166 having the above-mentioned configurations in opposite directions, the blade assembly 160 has a first cutting gap defined by the sharp teeth 167 and the short blunt teeth 168.The first cutting gap varies as the first blade 165 and the second blade 166 reciprocate oppositely. In some embodiments, in order to improve the cutting effect, the short blunt teeth 168 may be changed to sharp teeth 167.

The blade assembly 160 has a second cutting gap defined by sharp teeth 167 and long blunt teeth 169 at the rear. The second cutting gap varies as the first blade 165 and the second blade 166 reciprocate oppositely. The long blunt teeth 169 prevent hedges from entering the second cutting gap, but such a configuration can also help to prevent the limbs of the user from entering the second cutting gap. Thus, a higher safety is provided. Since this position is closer to the user, the situation more easily happens that the limbs (especially, hands) of the user approach the blade assembly 160.

The configuration of the blade assembly of the present invention realizes a good cutting effect. A good cutting effect is realized especially in the embodiment where the short blunt teeth 168 are changed to sharp teeth 167. On the basis of this, with the cutting effect guaranteed, the configurations of the motor and the transmission gear train can be adjusted accordingly in the present invention so that the size of the hedge cutter 100 of the present invention can be reduced to keep the hedge cutter more compact and lighter. This will be discussed in detail below.

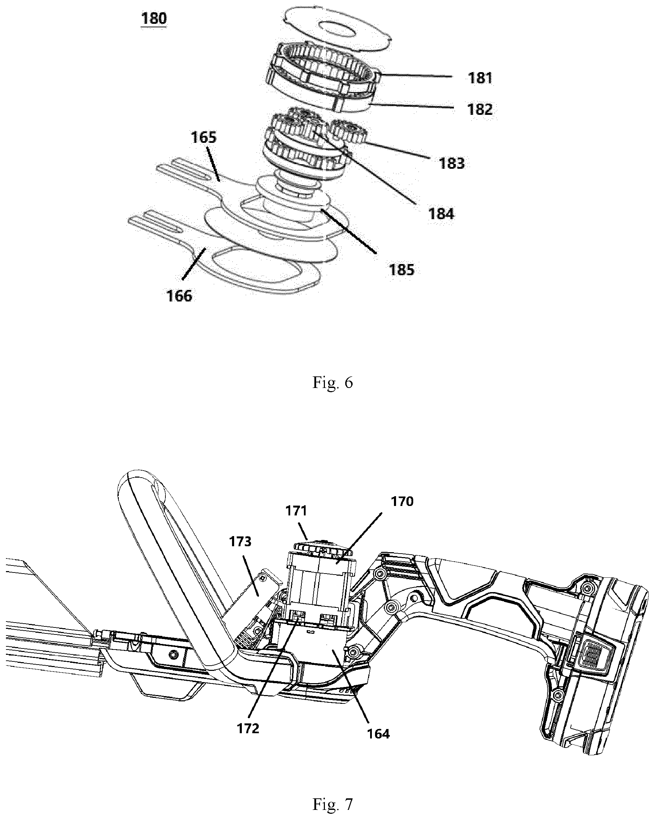

Fig. 2 shows the gear chamber 164 accommodating the transmission gear train. Fig. 6 shows the in-line arranged gear train 180 according to some embodiments of the present invention. In some embodiments, the in-line arranged gear train 180 has double layers of planetary gear systems arranged along an axis. Specifically, double layers of planetary gear systems each have gear rings 181 and 182, a sun gear 184 and at least one planetary gear 183. The output shaft of the double layers of planetary gear systems is connected to an eccentric mechanism 185. The eccentric mechanism 185 drives the first blade 165 and the second blade 166 to reciprocate linearly and oppositely. In some embodiments, especially in the embodiments where the short blunt teeth 168 are changed to sharp teeth 167, the double layers of planetary gear systems can be replaced a single layer of planetary gear system. Thus, the size and weight of the hedge cutter 100 of the present invention are further reduced. In addition, although the arrangements of double layers of planetary gears (two stages of planetary gears) and a single layer of planetary gear (one stage of planetary gear) are stated in the previous description, it is easily understood that the present invention is not limited to such arrangements. Various transmission mechanisms can be adopted for the present invention. The gear transmission mechanism comprises a planetary gear and a bevel gear. That is to say, the present invention covers any transmission mechanism that can transmit the rotary output of the driving motor to the eccentric mechanism and then convert the rotary movement to a linearly reciprocating movement through the interactions of the eccentric mechanism with the blades.

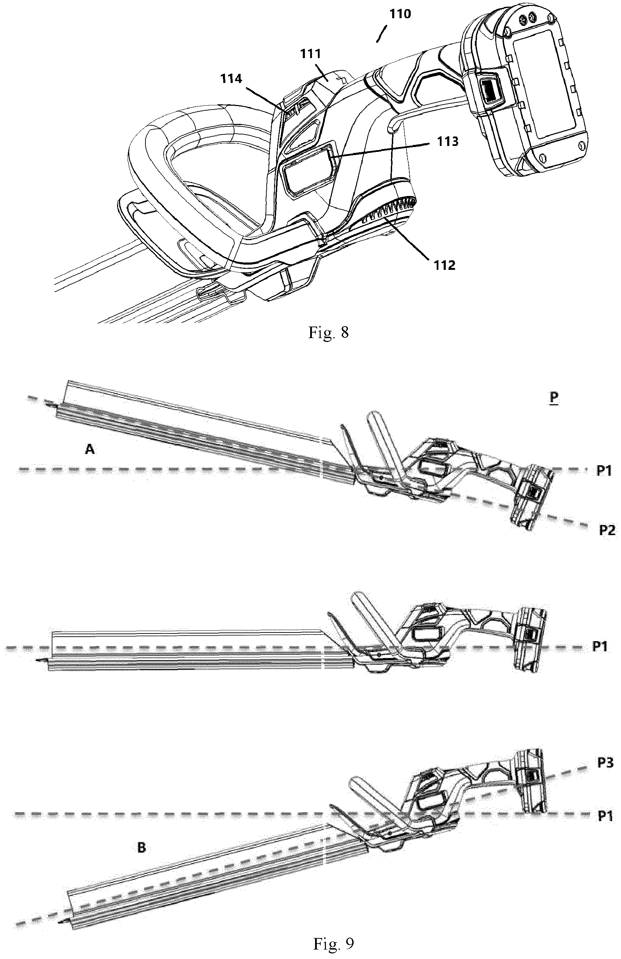

Fig. 7 is a partial view of the hedge cutter 100 of the present invention, wherein a part of the casing 110 is removed so as to clearly show some components. The motor 170 is shown in Fig. 7 and is arranged in line together with the gear train 180 in the gear chamber 164. As shown in Fig. 8, the casing 110 comprises a projection portion 111 at the top in some embodiments, and the inner space of the projection portion 111 is used for accommodating at least a part of the motor. Few layers of the gear train 180 of the hedge cutter 100 of the present invention and the projection portion 111 of the casing make possible the in-line arrangement of the motor 170 and the gear train 180. The in-line arrangement reduces the length of the hedge cutter 100, and thus reduces the volume and weight of the product. On the other hand, the in-line arrangement further enables the motor 170 and the gear train 180 of the hedge cutter 100 to successively approach the rear handle 130 as much as possible. Thus, the position of the barycenter is changed. The change of the barycenter will be further discussed below. Favorably, a safety switch or activation switch can be disposed on the projection portion 111.

Fig. 8 shows that the casing 110 comprises at least a first air inlet 112. The first air inlet 112 is located at the bottom of the casing 110. In one embodiment, the first air inlet 112 is formed by a plurality of small holes arranged roughly in the shape of a sector. Preferably, these small holes face downward to prevent dust from entering the casing 110. The casing 110 further comprises a second air inlet 113. The second air inlet 113 is located on the two sides of the casing. As shown in Figs. 7 and 8, the second air inlet 113 is roughly located at the same height as the air inlet 172 of the motor 170 and the heat radiator 173. The heat radiator 173 is disposed close to the control circuit (not shown) to help the control circuit to dissipate heat. Thus, air going from the first air inlet 112 into the casing 110 cools the gear train 180, and air going from the second air inlet 113 into the casing 110 accelerates the heat dissipation of the heat radiator and the control circuit. Air goes from the air inlet 172 in the motor casing into the motor 170 to cool the motor 170. Then air leaves the motor 170 through the bottom of the motor 170. A fan 171 is mounted at the bottom of the motor 170. The fan 171 produces a pressure difference for air circulation. A first air outlet 114 is provided on the two sides of the top 111 of the casing 110. Air leaving the bottom of the motor 170 leaves the casing 110 through the first air outlet 114. The above-mentioned cooling path achieves a good cooling effect on the motor and the control circuit.

Fig. 9 shows the hedge cutter 100 of the present invention. P represents a plane perpendicular to the plane where the blade assembly is located, namely, the paper in Fig. 9. P1, P2 and P3 represent the planes defined when the corresponding dashed lines extend in a direction perpendicular to the plane P. Wherein P1 is a horizontal plane, namely, the plane perpendicular to the direction of gravity. The middle hedge cutter 100 shows the situation when the hedge cutter is placed on the ground, wherein the plane where the blades are located is parallel to the plane P1. The upper and lower hedge cutters 100 show the situations where the hedge cutter 100 is suspended from the position of the front handle 120 in the vertical direction. The situations where the user holds the hedge cutter 100 during normal operations are simulated. In this case, the plane where the blade assembly 160 is located may be the plane P2 or the plane P3. The angle between the plane P1 and the plane P2 is A, and the angle between the plane P3 and the plane P1 is B. For the hedge cutter 100, the blade assembly 160, the motor 170, the gear train 180 and the battery are all relatively heavy components. As mentioned above, the position of the barycenter of the machine is adjusted by adjusting the in-line arranged motor 170 and gear train assembly and other aspects so that the projection position of the barycenter on the plane P is roughly located within the projection range of the front handle 120 on the plane P, and thus a better human-machine interaction effect is achieved.

To be more specific, it is sometimes necessary to frequently change the gesture of the body or arms to rotate the machine so as to change the service state of the machine during pruning operations. This not only increases the work intensity, but also hardly meets the pruning requirements in practice. In addition, the whole machine is poorly balanced if it is used in this way. For example, when a side of a hedge needs to be pruned, it is necessary to place the hedge cutter horizontally. When the hedge cutter used horizontally is compared with the hedge cutter used normally, the barycenter of the whole machine changes greatly relative to the position of the front handle, and the barycenter relative to the handle is located on a horizontal direction. Thus, the user will feel that the machine gets heavier, a great discomfort will be brought about to the arms, and the comfort of the user will be influenced when the user operates the machine. Such a problem will become more prominent especially when the capacity of the battery pack of the hedge cutter is large. Such a problem is solved by adjusting the position of the barycenter in the present invention. As shown in Fig. 9, the angle A is kept between 0° and 10°, preferably between 0° and 7°, more preferably between 0° and 5°, and the most preferably between 0° and 3°; or the angle B is kept between -10° and 0°, preferably between -7° and 0°, more preferably between -5° and 0°, and the most preferably between -3° and 0°.

In one embodiment, the front handle 120 can be adjusted around the axis horizontal to the longitudinal axis of the hedge cutter (namely in a direction perpendicular to the paper in Fig. 9). To be specific, the front handle 120 can rotate around the rotation axis to a desired angle, and then can be fixed by a locking mechanism (not shown). This better helps the user to adjust the position (namely, the angle relative to the casing) of the front handle to change the barycenter of the hedge cutter, thus adapting to the habits of the user. This is more favorable for the hedge cutter having different weights of a battery pack.

In other embodiments of the present invention, the rear handle 130 can rotate around the longitudinal axis of the hedge cutter relative to the front of the casing 110. In these embodiments, the hedge cutter further comprises a rotary component at least partially disposed on the casing 110 or the rear handle 130 so that the rear handle 130 and/or a part of the casing 110 comprising the rear handle 130 can rotate around the longitudinal axis of the hedge cutter relative to the other parts of the casing 110 (preferably, the parts accommodating the driving motor 170 and the gear train 180). Thus, when the rear handle 130 is kept static, the orientation of the cutting plane can be changed by holding the front handle 120. This helps to keep the barycenter of the hedge cutter within a vertical plane.

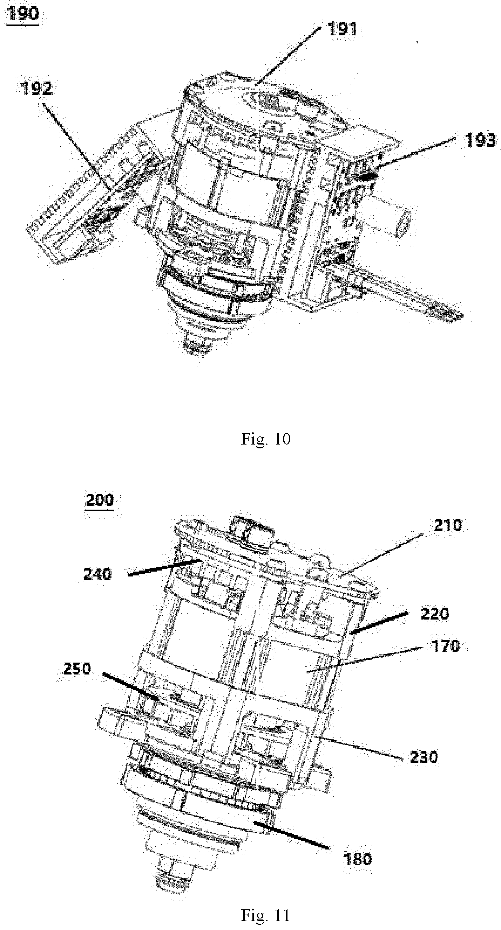

Fig. 10 is a perspective view of the integrated driving unit 190 according to some embodiments of the present invention. The integrated driving unit 190 comprises a motor and a printed circuit board assembly 191 mounted at one end (for example, front end or rear end) of the motor. The shape of the printed circuit board assembly 191 corresponds to the cross-section of the driving motor. Therefore, the printed circuit board assembly 191 and the driving motor may be assembled or integrated together in the form of shape to reduce the height and width of the integrated driving unit 190 (thus, the height and width of the hedge cutter are reduced). The printed circuit board assembly 191 may be used to realize various control functions of the hedge cutter 100. In some embodiments, besides the printed circuit board assembly 191 mounted at one end of the driving motor, the shown integrated driving unit 190 may further comprise additional printed circuit board assemblies 192 and 193, if necessary. Wherein, the printed circuit board assembly 193 may be arranged in line and in parallel together with the printed circuit board assembly 191, the motor, the motor fan and the transmission mechanism, that is to say, the printed circuit board assembly 193 may be parallel to the rough axis of the in-line arrangement of the printed circuit board 191, the motor, the motor fan and the transmission mechanism and may be attached to the in-line arrangement in contact fit, and the printed circuit board assembly 192 may be integrated with the in-line arrangement at a tilt angle. In the embodiments where such a configuration is adopted, besides the dimensional integration in the rough axis direction of the in-line arrangement, the integration in the direction/dimension perpendicular to the rough axis direction is realized. Thus, the height and width of the hedge cutter are reduced. It should be understood that the additional printed circuit board assemblies 192 and 193 are not available in some embodiments and the functions of the printed circuit board assemblies 192 and 193 are provided by the printed circuit board assembly 191. In addition, each printed circuit board assembly 191, 192 or 193 may be tightly attached to the heat radiator and integrated with the in-line arrangement. The printed circuit board assemblies may be mounted at one end/side of the driving motor by use of any mounting/attachment means, for example, bolts, fasteners and mounting brackets. In addition, preferably, a heat radiator may be disposed between the printed circuit board assembly 191 and the driving motor to improve the heat dissipation efficiency. In various embodiments of the present invention, the size of the hedge cutter in each dimension may be reduced by adopting the integration of the printed circuit board assembly in the rough axis direction of the in-line arrangement and the integration in the direction perpendicular to the rough axis direction. The adoption of the in-line arrangement provides the ability of integrating the printed circuit board assemblies in each dimension. Therefore, a compact and miniature casing and product design can be realized only by partially accommodating/adapting to the in-line arranged casing.

Fig. 11 is a perspective view of the integrated driving unit 200 according to some embodiments of the present invention. The integrated driving unit 200 comprises a printed circuit board assembly 210, a first mounting bracket 220, a motor 170 and a second mounting bracket 230 in turn from the top down. The printed circuit board assembly 210 is mounted on the motor 170 through the first mounting bracket 220, and the motor 170 is mounted on the casing 110 of the hedge cutter 100 through the second mounting bracket 230. The motor 170 is further connected to the gear train 180. Wherein, the printed circuit board assembly 210, the first mounting bracket 220, the motor 170 and the second mounting bracket 230 have cross-sections whose sizes are basically the same.

In some embodiments, the integrated driving unit 200 further comprises a heat dissipation device 240. In one embodiment, the heat dissipation device 240 is formed by a plurality of metal sheets radiating outwards from the center of a circle and separated from each other. The metal sheets may be selected from heat-conductive metals, for example, aluminum or aluminum alloy. It may be understood that heat radiators in other forms may be applicable to the present invention. The heat dissipation device is located between the motor 170 and the printed circuit board assembly 210. The heat dissipation device 240 is preferably a part of the first mounting bracket 220 so that the heat dissipation device can help the printed circuit board assembly 210 to dissipate heat. The heat dissipation device 240 faces the bottom of the motor 170.

In some embodiments, a fan 250 is connected to the output shaft of the motor 170. When the motor works, the rotations of the motor 170 enable the fan 250 to rotate. Air flows through the inside of the motor, leaves the motor from the bottom of the motor, is blown to the heat dissipation device 240, and then leaves the hedge cutter from the air duct or air outlet on the casing 110 of the hedge cutter 100. Thus, heat is taken away from the motor and the heat dissipation device. Through the heat radiator disposed between the motor and the printed circuit board assembly, the technical solution of the present invention improves the heat dissipation effect on the components, thus improving the performance of the hedge cutter and prolonging the service life of the hedge cutter.

## Claims

1. A hedge cutter (100), comprising:
a casing (110), the casing (110) comprising a front handle (120) and a rear handle (130),
a driving assembly (190, 200) located in the casing (110) and comprising a motor (170) and a first control circuit board (191, 210),
a transmission assembly located in the casing (110) and coupled with the driving assembly (190, 200), and
a blade assembly (160) coupled with the transmission assembly, the blade assembly (160) defining the plane of the blade assembly (160),
**characterized in that,** when the hedge cutter (100) is suspended from the front handle (120), the angle between the plane of the blade assembly (160) and the horizontal plane (P1) is between -7° and 7°,
wherein the first control circuit board (191, 210) is located at the top of the motor (170), and the motor (170) and the first control circuit board (191, 210) have a similar cross-section shape.

2. The hedge cutter (100) as claimed in claim 1, wherein the angle between the plane of the blade assembly (160) and the horizontal plane (P1) is between -5° and 5°, and preferably between -3° and 3°.

3. The hedge cutter (100) as claimed in claim 1, wherein the blade assembly (160) comprises at least one blade (165, 166), and the blade (165, 166) comprises sharp teeth (167) on one side and blunt teeth (168, 169) on the other side.

4. The hedge cutter (100) as claimed in claim 3, wherein the other side comprises short blunt teeth (168) at the front and long blunt teeth (169) at the rear.

5. The hedge cutter (100) as claimed in claim 1, wherein the transmission assembly is an in-line gear train (180) and the in-line gear train (180) comprises one or more planetary gear trains, and one or more planetary gear trains are arranged in line along an axis.

6. The hedge cutter (100) as claimed in claim 5, wherein the motor (170) and the in-line gear train (180) are arranged in line along the axis.

7. The hedge cutter (100) as claimed in claim 6, wherein the top of the casing (110) has a projection portion (111) and the projection portion (111) is used to accommodate at least a part of the driving assembly (190, 200).

8. The hedge cutter (100) as claimed in claim 1, wherein the casing (110) a first vent located at the bottom or side of the casing (110) and a second vent located at the top of the casing (110).

9. The hedge cutter (100) as claimed in claim 8, wherein the first vent comprises a first air inlet (112) located at the bottom of the casing (110), and the first air inlet (112) faces the driving assembly (190, 200).

10. The hedge cutter (100) as claimed in claim 8, wherein the first vent comprises a second air inlet (113) located at the side of the casing (110), and the second air inlet (113) faces a heat dissipation device (173) in the casing (110) and/or a vent in the driving assembly (190, 200).

11. The hedge cutter (100) as claimed in claim 8, wherein the second vent faces a fan (171) in the driving assembly (190, 200).

12. The hedge cutter (100) as claimed in claim 1, wherein the motor fan (171, 250), motor (170) and first control circuit board (191, 210) are in the same in-line arrangement.

13. The hedge cutter (100) as claimed in claim 10, wherein the heat dissipation device (173) is located on one side of the driving assembly (190, 200), and a second control circuit board (192) is thermally connected to the heat dissipation device (173).

14. The hedge cutter (100) as claimed in any of claims 1 to 13, wherein the front handle (120) can rotate around the mounting axis so as to regulate the angle of the front handle (120) relative to the casing (110).

15. The hedge cutter (100) as claimed in any of claims 1 to 13, wherein the rear handle (130) can rotate around the longitudinal axis of the hedge cutter (100).

## Patentansprüche

1. Heckenschneider (100), umfassend:
ein Gehäuse (110), wobei das Gehäuse (110) einen vorderen Griff (120) und einen hinteren Griff (130) umfasst,
eine Antriebseinheit (190, 200), die sich im Gehäuse (110) befindet und einen Motor (170) und eine erste Steuerplatine (191, 210) umfasst,
eine Getriebeeinheit, die sich im Gehäuse (110) befindet und mit der Antriebseinheit (190, 200) gekoppelt ist, und
eine Messereinheit (160), die mit der Getriebeeinheit gekoppelt ist, wobei die Messereinheit (160) die Ebene der Messereinheit (160) definiert,
**dadurch gekennzeichnet, dass** dann, wenn der Heckenschneider (100) am vorderen Griff (120) aufgehängt ist, der Winkel zwischen der Ebene der Messereinheit (160) und der horizontalen Ebene (P1) zwischen -7° und 7° liegt,
wobei sich die erste Steuerplatine (191, 210) an der Oberseite des Motors (170) befindet, und der Motor (170) und die erste Steuerplatine (191, 210) eine ähnliche Querschnittsform aufweisen.

2. Heckenschneider (100) nach Anspruch 1,
wobei der Winkel zwischen der Ebene der Messereinheit (160) und der horizontalen Ebene (P1) zwischen -5° und 5°, vorzugsweise zwischen -3° und 3° liegt.

3. Heckenschneider (100) nach Anspruch 1,
wobei die Messereinheit (160) zumindest ein Messer (165, 166) umfasst und das Messer (165, 166) auf einer Seite scharfe Zähne (167) und auf der anderen Seite stumpfe Zähne (168, 169) umfasst.

4. Heckenschneider (100) nach Anspruch 3,
wobei die andere Seite kürzere stumpfe Zähne (168) an der Vorderseite und längere stumpfe Zähne (169) an der Rückseite aufweist.

5. Heckenschneider (100) nach Anspruch 1,
wobei die Getriebeeinheit ein Inline-Zahnradgetriebe (180) ist und das Inline-Zahnradgetriebe (180) ein oder mehrere Planetengetriebe umfasst,
wobei ein oder mehrere Planetengetriebe entlang einer Achse in einer Linie angeordnet sind.

6. Heckenschneider (100) nach Anspruch 5,
wobei der Motor (170) und das Inline-Zahnradgetriebe (180) entlang der Achse in einer Linie angeordnet sind.

7. Heckenschneider (100) nach Anspruch 6,
wobei die Oberseite des Gehäuses (110) einen vorspringenden Abschnitt (111) aufweist und der vorspringende Abschnitt (111) dazu dient, zumindest einen Teil der Antriebseinheit (190, 200) aufzunehmen.

8. Heckenschneider (100) nach Anspruch 1,
wobei das Gehäuse (110) eine erste Entlüftungsöffnung, die sich am Boden oder an der Seitenfläche des Gehäuses (110) befindet, und eine zweite Entlüftungsöffnung, die sich an der Oberseite des Gehäuses (110) befindet, aufweist.

9. Heckenschneider (100) nach Anspruch 8,
wobei die erste Entlüftungsöffnung einen ersten Lufteinlass (112) umfasst, der sich am Boden des Gehäuses (110) befindet, und der erste Lufteinlass (112) der Antriebseinheit (190, 200) zugewandt ist.

10. Heckenschneider (100) nach Anspruch 8,
wobei die erste Entlüftungsöffnung einen zweiten Lufteinlass (113) umfasst, der sich an der Seitenfläche des Gehäuses (110) befindet, und der zweite Lufteinlass (113) einer Wärmeableitungsvorrichtung (173) im Gehäuse (110) und/oder einer Entlüftungsöffnung in der Antriebseinheit (190, 200) zugewandt ist.

11. Heckenschneider (100) nach Anspruch 8,
wobei die zweite Entlüftungsöffnung einem Lüfter (171) in der Antriebseinheit (190, 200) zugewandt ist.

12. Heckenschneider (100) nach Anspruch 1,
wobei der Motorlüfter (171, 250), der Motor (170) und die erste Steuerplatine (191, 210) in derselben Inline-Anordnung liegen.

13. Heckenschneider (100) nach Anspruch 10,
wobei sich die Wärmeableitungsvorrichtung (173) auf einer Seite der Antriebseinheit (190, 200) befindet und eine zweite Steuerplatine (192) thermisch mit der Wärmeableitungsvorrichtung (173) verbunden ist.

14. Heckenschneider (100) nach einem der Ansprüche 1 bis 13,
wobei der vordere Griff (120) um die Montageachse drehbar ist, um den Winkel des vorderen Griffs (120) relativ zum Gehäuse (110) einzustellen.

15. Heckenschneider (100) nach einem der Ansprüche 1 bis 13,
wobei der hintere Griff (130) um die Längsachse des Heckenschneiders (100) drehbar ist.

## Revendications

1. Taille-haie (100), comprenant :
un boîtier (110), le boîtier (110) comprenant une poignée avant (120) et une poignée arrière (130),
un ensemble d'entraînement (190, 200) situé dans le boîtier (110) et comprenant un moteur (170) et une première carte de circuit de commande (191, 210),
un ensemble de transmission situé dans le boîtier (110) et couplé à l'ensemble d'entraînement (190, 200), et
un ensemble de lame (160) couplé à l'ensemble de transmission, l'ensemble de lame (160) définissant le plan de l'ensemble de lame (160),
**caractérisé en ce que**
lorsque le taille-haie (100) est suspendu à la poignée avant (120), l'angle entre le plan de l'ensemble de lame (160) et le plan horizontal (P1) est compris entre -7° et 7°,
la première carte de circuit de commande (191, 210) est située sur le dessus du moteur (170), et le moteur (170) et la première carte de circuit de commande (191, 210) ont une forme similaire en coupe transversale.

2. Taille-haie (100) selon la revendication 1,
dans lequel l'angle entre le plan de l'ensemble de lame (160) et le plan horizontal (P1) est compris entre -5° et 5°, et de préférence entre -3° et 3°.

3. Taille-haie (100) selon la revendication 1,
dans lequel l'ensemble de lame (160) comprend au moins une lame (165, 166), et la lame (165, 166) comprend des dents acérées (167) d'un côté et des dents émoussées (168, 169) de l'autre côté.

4. Taille-haie (100) selon la revendication 3,
dans lequel l'autre côté comprend des dents émoussées courtes (168) à l'avant et des dents émoussées longues (169) à l'arrière.

5. Taille-haie (100) selon la revendication 1,
dans lequel l'ensemble de transmission est un train d'engrenages en ligne (180), et le train d'engrenages en ligne (180) comprend un ou plusieurs trains d'engrenages planétaires, et un ou plusieurs trains d'engrenages planétaires sont disposés en ligne le long d'un axe.

6. Taille-haie (100) selon la revendication 5,
dans lequel le moteur (170) et le train d'engrenages en ligne (180) sont disposés en ligne le long de l'axe.

7. Taille-haie (100) selon la revendication 6,
dans lequel le dessus du boîtier (110) comporte une partie en saillie (111), et la partie en saillie (111) est utilisée pour loger au moins une partie de l'ensemble d'entraînement (190, 200).

8. Taille-haie (100) selon la revendication 1,
dans lequel le boîtier (110) comporte un premier évent situé au fond ou sur le côté du boîtier (110) et un deuxième évent situé sur le dessus du boîtier (110).

9. Taille-haie (100) selon la revendication 8,
dans lequel le premier évent comprend une première entrée d'air (112) située au fond du boîtier (110), et la première entrée d'air (112) est tournée vers l'ensemble d'entraînement (190, 200).

10. Taille-haie (100) selon la revendication 8,
dans lequel le premier évent comprend une deuxième entrée d'air (113) située sur le côté du boîtier (110), et la deuxième entrée d'air (113) est tournée vers un dispositif de dissipation de chaleur (173) dans le boîtier (110) et/ou vers un évent dans l'ensemble d'entraînement (190, 200).

11. Taille-haie (100) selon la revendication 8,
dans lequel le deuxième évent est tourné vers un ventilateur (171) dans l'ensemble d'entraînement (190, 200).

12. Taille-haie (100) selon la revendication 1,
dans lequel le ventilateur (171, 250), le moteur (170) et la première carte de circuit de commande (191, 210) se situent dans le même agencement en ligne.

13. Taille-haie (100) selon la revendication 10,
dans lequel le dispositif de dissipation thermique (173) est situé sur un côté de l'ensemble d'entraînement (190, 200), et une deuxième carte de circuit de commande (192) est reliée thermiquement au dispositif de dissipation thermique (173).

14. Taille-haie (100) selon l'une des revendications 1 à 13,
dans lequel la poignée avant (120) peut tourner autour de l'axe de montage afin de régler l'angle de la poignée avant (120) par rapport au boîtier (110).

15. Taille-haie (100) selon l'une des revendications 1 à 13,
dans lequel la poignée arrière (130) peut tourner autour de l'axe longitudinal du taille-haie (100).
